(19) Europäisches Patentamt
European Patent Office
Office européen des brevets

(11) Publication number: **0 413 136 B1**

(12) # EUROPEAN PATENT SPECIFICATION

(45) Date of publication of patent specification: **16.03.94**

(51) Int. Cl.5: **C08L 29/04**, C09J 129/04, B32B 17/10, //C03C17/34

(21) Application number: **90113248.0**

(22) Date of filing: **11.07.90**

(54) **Polymer composition, adhesive and labelled glass material.**

(30) Priority: **14.07.89 JP 183351/89**

(43) Date of publication of application:
**20.02.91 Bulletin 91/08**

(45) Publication of the grant of the patent:
**16.03.94 Bulletin 94/11**

(84) Designated Contracting States:
**DE FR**

(56) References cited:
**US-A- 4 708 947**

(73) Proprietor: **KURARAY CO., LTD.**
**1621 Sakazu**
**Kurashiki-City(JP)**

(72) Inventor: **Shiraga, Sadahiko**
**1621 Sakazu**
**Kurashiki-City, Okayama(JP)**
Inventor: **Miyazaki, Hirotoshi**
**1621 Sakazu**
**Kurashiki-City, Okayama(JP)**
Inventor: **Maruyama, Hitoshi**
**1621 Sakazu**
**Kurashiki-City, Okayama(JP)**

(74) Representative: **VOSSIUS & PARTNER**
**Postfach 86 07 67**
**D-81634 München (DE)**

**EP 0 413 136 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a composition, an adhesive comprising the same, and glass base materials on which a label applied with said adhesive is patched.

More specifically, the present invention relates to water-based adhesives used for labels for bottles to contain beverage, which have high adhesive strength, high adhesion even when immersed in warm water or cold water (hereinafter referred to as "water resistance"), and which provide ready peelability of label when glass base materials, particularly glass bottles, patched with the label are washed with aqueous alkali solution (hereinafter referred to as "alkali washability").

Casein-based adhesives, starch-based adhesives and polyvinyl alcohol-based adhesives are known aqueous adhesives. However, casein-based adhesives have, since casein is a natural substance, drawbacks of unstable properties and ready degradation, and further are insufficient in water resistance. A known prescription for starch-based adhesives uses starch in combination with urea and styrene-maleic anhydride copolymer (see US-A-3,857,803). This prescription, however, gives adhesives having the drawbacks of low water resistance and poor alkali washability.

Known polyvinyl alcohol (hereinafter referred to as PVA) -based adhesives are, for example, i) those comprising conventional PVA incorporated with starch and inorganic thickener (see DE-A-2,364,438) and those comprising PVA and a thickener incorporated with urea and synthetic resin emulsion (see JP-A-16572/1981). These adhesives, however, all have the drawback of insufficient water resistance and poor alkali washability.

A composition comprising PVA, chitosan and an aldehyde, and an adhesive comprising this composition are also known (see US-A-4,708,947). This adhesive has, although being better in water resistance, the drawback of poor alkali washability.

An object of the present invention is to provide an adhesive comprising a novel composition, which satisfies various requirements for adhesives in general and further is excellent in water resistance and alkali washability, and also to provide a glass base material patched with a label with said adhesive applied thereon.

An embodiment of the present invention provides a composition comprising a PVA (A), an amino compound or its salt (B), a crosslinking agent (C) and as component (D) at least one water-insoluble and alkali-soluble substance and/or water-insoluble and alkali-swellable substance .

Another embodiment of the present invention provides an adhesive having excellent water resistance and alkali washability, comprising the above-objective composition.

Still another embodiment of the present invention provides a glass base material having excellent water resistance and alkali washability, patched with a label with the above-objective adhesive applied thereon.

The PVA (A) used in the present invention includes any PVA as long as it is water-soluble, and examples thereof are, besides conventional PVA, silicon-modified PVA, epoxy-modified PVA, acetacetylated PVA, carboxyl group-modified PVA, sulfonic acid group-modified PVA, phosphoric acid group-modified PVA, amino group-modified PVA, ammonium group-modified PVA, amido group-modified PVA, methylol group-modified PVA, and modified PVA's copolymerized with e.g. a vinyl ether or vinyl ester having a long-chain alkyl group, a (meth)acrylamide or an $\alpha$ -olefin. The polymerization degree of these PVA's is not specifically limited, but it is generally selected from the range of from 100 to 5,000, preferably from the range of from 300 to 3,000. The degree of hydrolysis of these PVA's is not specifically limited either, but it is generally selected from the range of from 70 to 100 mol%, preferably from 90 to 100 mol%.

Examples of the amino compound or its salt (B) used in the present invention are polyamines, such as ethylenediamine, trimethylenediamine, hexamethylenediamine, triaminopropane and polyethyleneimine, or salts thereof; melamine resins; polyolefin copolymers having amino group or salts thereof; chitosan; celluloses having amino group, such as amino group-modified cellulose, or salts thereof; and amino group-modified starch or salt thereof.
Preferred among these compounds are those soluble in water, chitosan being particularly preferred.

The amino compound or its salt (B) used in the present invention can be dissolved in water or aqueous solutions containing an acid. Examples of the acid used generally are acetic acid, formic acid, lactic acid, citric acid, benzoic acid, sulfamic acid, hydrochloric acid, sulfuric acid, phosphoric acid, fumaric acid and maleic acid.

The crosslinking agent (C) used in the present invention includes compounds which are reactable with the PVA (A) and the amino compound or its salt (B), have, preferably, at least 2 functional groups, and form, upon the reaction, water-insoluble crosslinked matter. Example of these compounds are epoxy compounds, aldehyde-based compounds, aziridine compounds, isocyanate-based compounds, aminoplast compounds and multivalent metal compounds.

The epoxy compounds herein mean compounds containing in the molecule thereof at least 2 epoxy groups, e.g. glycidyl groups, and their examples are sorbitol polyglycidyl ether glycerol diglycidyl ether, glycerol triglycidyl ether and polyethylene glycol diglycidyl ether, among which particularly preferred is glycerol triglycidyl ether. Polyamide epichlorohydrin resins (e.g. POLYFIX 203, made by Showa High Polymer Co., and KAIMEN 557 made by DIC-Hercules Co.) are also preferred epoxy compounds.

Any aldehyde-based compound can be used insofar as it is water soluble and generates an aldehyde in aqueous solutions thereof. Examples of the aldehyde-based compounds are monoaldehydes such as formaldehyde, acetaldehyde, propionaldehyde and butylaldehyde; multialdehydes such as glyoxal, glutaraldehyde and dialdehyde-starch; polyaldehydes; condensates of formaldehyde and ammonia, such as hexamethylenetetramine; reaction products of cyclic urea with glyoxal; and copolymerized reaction products of acrylamide with glyoxal. Among these compounds, glyoxal and hexamethylenetetramine are preferred.

The aziridine compounds herein include compounds containing in the molecule thereof at least 2 ethyleneimine derivatives, and their examples are given below, water-soluble ones being preferred.

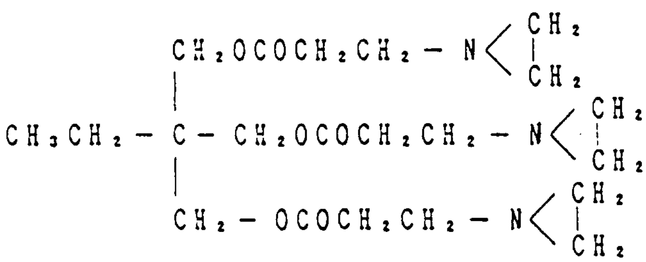

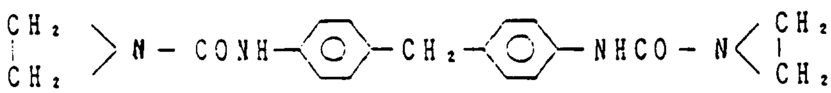

The aminoplast compounds herein are condensates of compounds containing amino groups and aldehydes, and, more concretely, condensates of e.g. melamine, urea or aniline.

Also used are those obtained by modifying the above compounds with methylol, alkoxy, alkoxymethyl or amide groups, and initial condensates of the foregoing. The multivalent metal compound herein means water soluble compounds of 2- or more valent metals, and their examples are chlorides or sulfates of aluminum, iron, copper, zinc, tin, titanium, nickel, magnesium, vanadium, chrome or zirconium.

Preferably used among these metal compounds are aluminum chloride, aluminum sulfate, potassium alum and ammonium alum from the viewpoint of the effect of providing resistance to water.

Particularly preferred among the above-mentioned various crosslinking agents (C) are aldehyde-based compounds, more particularly glyoxal, in view of ease of handling (odorless, stable viscosity). Hexamethylenetetramine can also be used preferably.

The at least one member (D) selected from water-insoluble and alkali-soluble substances and water-insoluble and alkali-swellable substances (hereinafter sometimes referred to as "component (D)") used in and characterizing the present invention must have the property of being capable of being present in particle form in the resulting aqueous adhesive solution or dispersion, that of being water-insoluble and that of being alkali-soluble and/or alkali-swellable. It is preferred that the component (D) be dissolved or swollen in alkali in a short time. The term "water-insoluble" used in the present invention means that the component is insoluble in water at 0 to 100 °C, preferably at 0 to 30 °C. The term "alkali-soluble and/or alkali-swellable" means that the component is dissolved and/or swollen in an alkali solution having a concentration of at least 0.5% by weight at a temperature of at least 20 °C and for an immersion time of not more than 10 minutes, preferably in an aqueous sodium hydroxide solution having a concentration of 2 to 4% by weight at a temperature of 60 to 70 °C and for an immersion time of 3 to 5 minutes.

There are no specific restrictions with respect to the form of the component (D) insofar as it is insoluble in water and is present in particle form in the resulting aqueous adhesive solution or dispersion and does not impair the function of the adhesive. It is, however, preferred that the form be a powder or an aqueous dispersion such as emulsion or suspension, among which particularly preferred is a powder form. The particle size is not specifically limited but, in the case of a powder form, the average particle diameter is preferably not more than 100 μ m.

Examples of the component (D) used in the present invention are copolymers of olefin monomers containing carboxyl group, polymers of acid type having high water absorption properties (super-absorbent resins of acid type), casein, cellulose-based compounds, starch and aluminum (preferably fine powder). Examples of the copolymers of olefin monomers containing carboxyl group are copolymers of a carboxylic group-containing monomer {hereinafter sometimes referred to as monomer (1)}, such as (meth)acrylic acid, crotonic acid, maleic anhydride or itaconic acid, with e.g. an $\alpha$ -olefin, vinyl ester, vinyl ether, (meth)acrylic acid ester, vinyl chloride or acrylonitrile {hereinafter referred to as monomer (2)}. Suitable $\alpha$ -olefins are those having 2 to 20 carbon atoms, preferably 2 to 8 carbon atoms, and their examples are ethylene, propylene, butene-1, butene-2, isobutene, 2-methyl-butene-1, 3-methyl-butene-1, pentene-1, 2-methyl-pentene-1, 3-methyl-pentene-1, 4-methyl-pentene-1, octene-1, diisobutylene, styrene and $\alpha$ -methylstyrene.

These olefins are used singly or in combination. Examples of the vinyl ester are vinyl acetate, vinyl propionate, t-butylvinyl ester and vinyl varsatate. Examples of the vinyl ether are ethyl vinyl ether, butyl vinyl ether, octyl vinyl ether, lauryl vinyl ether and stearyl vinyl ether. Examples of the (meth)acrylic acid ester are methyl, ethyl, butyl, 2-ethylhexyl and lauryl (meth)acrylates. These compounds may be used singly or in combination. The ratio copolymerized of the monomer (1) to the monomer (2) is not specifically limited as long as the resulting copolymer is insoluble in water and soluble and/or swellable in alkali, but it is, in the case where the monomer (1) containing carboxyl group is maleic anhydride, preferably a molar (2)/(1) ratio of 0.5/1 to 5/1, more preferably 1/1. In the case where the carboxylcontaining monomer (1) is (meth)acrylic acid, crotonic acid or itaconic acid, the copolymerization ratio is preferably a molar (2)/(1) ratio of 5/1 to 50/1.

Preferably used for the purpose of the present invention among the above copolymers are copolymers of the carboxyl-containing monomer with the vinyl ester and copolymers of $\alpha$ -olefin with maleic anhydride, particularly those of isobutene with maleic anhydride and styrene with maleic anhydride from the viewpoint of water insolubility and alkali solubility and/or swellability. Here the maleic anhydride may be used in combination with a small amount of not more than 10% based on the weight of maleic anhydride of maleic acid, salts of maleic acid or monoesters of maleic acid.

It is preferred that the above-mentioned copolymers be used in the form of fine powder having an average particle diameter of not more than 100 $\mu$ m.

The super-absorbent resin of acid type herein is obtained by subjecting a polymer having high water absorption properties (super-absorbent resin) to dealkali treatment (for example neutralization with an acid), or by using, upon production of a super-absorbentresin, only monomers of acid type, and must assume powder form that is water insoluble and swellable in alkali. Examples of the super-absorbent resin herein are crosslinked polyacrylate, crosslinked hydrolyzed products of vinyl acetate-methyl acrylate copolymers, crosslinked hydrolyzed vinyl acetate-monomethyl maleate copolymers, crosslinked hydrolyzed isobutylenemaleic anhydride copolymers, starch-acrylic acid grafted copolymers, polysaccharide-acrylic acid grafted copolymers, hydrolyzed products of starch-acrylonitrile grafted copolymers, crosslinked carboxymethylcellulose and crosslinked polyethylene oxide. Preferred among these is one obtained by de-alkali treating a crosslinked hydrolyzed isobutylene-maleic anhydride copolymer, which is suited for the purpose of the present invention when used in the form of fine powder. The casein herein includes acid casein, rennet casein, lactic casein, and modified compounds of the foregoing, which are also suited for the purpose of the present invention when used in powder form.

Examples of the cellulose-based compound which may be used in the present invention are, among others, carboxymethylcellulose of acid type (hereinafter referred to as acid type CMC), metal salts of relatively low degree of substitution of carboxymethylcellulose (e.g. Al, Mg, Ca, Na and K salts of substitution degree of 10 to 30 mol%), hydroxypropylmethylcellulose phthalate, hydroxypropylmethylcellulose acetate-succinate, carboxymethylethylcellulose and cellulose acetate-phthalate, all of which are suitably used in the form of fine powder. Most preferred among these is acid type CMC.

Examples of the starch which may be used in the present invention include natural starches such as sweet potato starch, potato starch, corn starch, wheat starch, tapioca starch and rice starch, starch derivatives such as decomposed products of natural starches, $\alpha$ -starch, starch ester and starch ether and processed starches having been subjected to physical treatment such as with radioactive ray or neutron ray, by high-frequency treatment and by wet heat treatment. Among these starches, natural starches are preferred and they are suitably used in the form of fine powder.

These components (D) are insoluble in water but can be dissolved and/or swollen, in a short time, in an aqueous alkali solution. Examples of the alkali are hydroxides and carbonates of sodium, potassium and lithium, ammonia, organic amines, and hydroxides and carbonates of calcium, magnesium, aluminum and zinc. For example in beer industry, sodium hydroxide, which is inexpensive and readily commercially available, is used for the alkali washing liquid, and the alkali washability hence is of practical value and

useful if it is effective in the case where aqueous sodium hydroxide solution is used.

Preferred among the above components (D) are $\alpha$ -olefinmaleic anhydride copolymer, crotonic acid-modified polyvinyl acetate, caseins and aluminum; and more particularly preferred in view of water resistance and alkali washability are isobutylene-maleic anhydride copolymer and styrenemaleic anhydride copolymer. These copolymers are preferably used in the form of fine powder.

The incorporation amounts of the essential components of the composition of the present invention, that is, the PVA (A) (hereinafter sometimes referred to as "component (A)"), the amino compound or its salt (B) {hereinafter sometimes referred to as "component (B)"}, the crosslinking agent (C) {hereinafter sometimes referred to as "component (C)"} and component (D) are not specifically limited but the following are generally recommended. The amount of component (B) incorporated based on 100 parts by weight (hereinafter simply referred to as "parts") of component (A) is 1 to 100 parts, preferably 5 to 30 parts, and that of component (C) based on 100 parts of component (A) is 0.05 to 100 parts, preferably 0.2 to 30 parts. In the case where component (B) is incorporated in an amount of less than 1 part, the effect of increasing water resistance is small, while an incorporation amount of component (B) exceeding 100 parts causes the adhesive power of the obtained composition to decrease. In the case where the amount of component (C) incorporated is less than 0.05 part, the crosslinking effect is small, while that of component (C) exceeding 100 parts causes the viscosity stability of the obtained composition to decrease.

The amount of component (D) incorporated is not specifically limited, but it is generally 1 to 500 parts, preferably 20 to 300 parts based on 100 parts of component (A) in view of adhesive power and alkali washability. In the case where the amount of component (D) incorporated is less than 1 part on the above basis, its contribution to alkali washability is small, while the amount of component (D) exceeding 500 parts causes the resistance of adhesion to water to decrease and the resistance to cold water to decrease.

While the adhesive of the present invention exhibits sufficient performances even when it is comprised of 4 components of the above components (A), (B), (C) and (D), it can further contain a filler (E) {hereinafter sometimes referred to as "component (E)"} and/or an aqueous emulsion (F) {hereinafter sometimes referred to as "component (F)"}. The co-use of filler (E) will produce the effect of increasing water resistance, improving the fluidity of the adhesive liquid, improving creep resistance, improving the initial tack, and the like. Component (E), i.e. Filler (E), is used in an amount of 10 to 500 parts, preferably 20 to 400 parts, more preferably 50 to 300 parts based on 100 parts of component (A). If component (E) is used in an amount exceeding 500 parts, the fluidity of the adhesive will decrease and the adhesiveness will also decrease.

Examples of the filler (E) used in the present invention are clays such as kaolinite, halloysite, pyrophylite and sericite, inorganic substances such as talc, silica, heavy, light and surface-treated calcium carbonates, aluminum hydroxide, aluminum oxide, gypsum, titanium oxide, diatomaceous earth, barium sulfate, calcium sulfate, zeolite, zinc oxide, lithopone, satin white, silicic acid, calcium silicate, aluminum silicate, mica, magnesium carbonate and glass, and organic materials such as plastic pigments, benzoguanamine resin, acrylic resins, styrene resin and ureaformaldehyde resins. These substances may be used singly or in combination. Among these fillers, clays are most preferred in view of their high ability to provide resistance to cold water.

Further the co-use of an aqueous emulsion (F) produces the effects of increasing initial adhesive strength, increasing ease of controlling viscosity, and improving water resistance and fluidity.

Examples of the aqueous emulsion (F) are SBR latice, NBR latice, polyvinyl acetate emulsion, ethylene-vinyl acetate copolymer emulsions, poly(meth)acrylate emulsions, and polyvinyl chloride emulsions, among which preferred are ethylene-vinyl acetate copolymer emulsions. The aqueous emulsion (F) is used in an amount of 10 to 500 parts, preferably 20 to 300 parts based on 100 parts of component (A). If component (F) is used in an amount exceeding 500 parts, it will lead to a decrease in adhesiveness and water resistance. In the present invention, as required, not more than 100 parts of a thickener can be used, together with the above components, based on 100 parts of component (A). The thickener is used, as required, for the purposes of increasing intitial adhesiveness and ease of viscosity control, improving fluidity and preventing stringiness.

Examples of the thickener are organic polymers such as polyvinylpyrrolidone, poly(meth)acrylates and salts thereof, celluloses and starch, and inorganic materials such as montmorillonite, hectorite and bentonite.

These thickeners may be used singly or in combination.

Further there may, as required, be added various additives, such as defoamer, antiseptic agent, mildew-proof agent, viscosity stabilizer, pigment, deodorant and perfume. For the purpose of improving adhesiveness, a water-soluble boron compound such as boric acid, borax, borate of polyhydric alcohol such as glycerine or ethylene glycol, or the like may also be added. This addition, however, if too much, will

adversely affect high-speed applicability of the adhesive.

Although the adhesive of the present invention is aqueous, it may incorporate, for the purpose of preventing freezing or giving flexibility to the adhesive layer, organic solvents, e.g. alcohols such as methanol, ethylene glycol, glycerine and cellosolve.

The adhesive of the present invention is prepared, for example, as follows. An aqueous slurry is prepared by dumping into water with stirring a mixture of PVA (A) and component (D), and further, as required, filler (E) and other additives mixed beforehand, or by putting into water one after another with stirring other additives, filler (E), component (D) and PVA (A). The slurry is dissolved by heating by directly blowing steam vapor into the slurry in a jet cooker or preparation tank or by indirect heating through a jacket, and then the solution is cooled. Then amino compound or its salt (B) and crosslinking agent (C) is successively added with stirring to the solution to give an adhesive composition. The adhesive composition thus obtained is a mixture comprising an aqueous solution containing PVA (A) as principal component and further containing component (D) in the form of particles. The solid content of the adhesive of the present invention is not specifically limited, but it is preferably 5 to 50% by weight, more preferably 10 to 40% by weight.

The adhesive of the present invention prepared by for example the above-described process is used for patching labels, particularly for labels for glass bottles to contain beverages, in particular beer bottles. The viscosity of the adhesive when applied is adjusted depending on the type of application, and, for the purpose of performing high-speed application the viscosity at the application temperature is preferably 2,000 to 100,000 cps as measured with B-type viscosimeter, more preferably 10,000 to 50,000 cps.

Examples of the labels to which the adhesive of the present invention is applied are those made of paper, coated papers such as aluminum-deposited, aluminum-laminated, varnished and resin finished, synthetic paper, films of organic and inorganic compounds, and films of metal compounds. Any object can be patched with these labels, including inorganic and organic materials such as glass, metals and plastics, among which most suited are glass bottles for beverages.

The adhesive comprising the composition of the present invention has high initial bond strength and well-balanced cold water resistance and alkali washability. Thus, since the adhesive of the present invention has high resistance to cold water, when glass materials, particularly glass bottles filled with beverage and patched with the labels applied with the adhesive are cooled. This fact together with the fact that the labels can readily be peeled off by aqueous alkali washing makes the adhesive very useful particularly for labels to be patched on glass bottles for beverages. Furthermore, the adhesive of the present invention has high stability when stored, and can suitably be adapted for high-speed automatic patching operation. Accordingly, the adhesive of the present invention has very high commercial value.

Other features of the invention will become apparent in the course of the following descriptions of exemplary embodiments which are given for illustration of the invention and are not intended to be limiting thereof. In the Examples, "parts" and "%" mean, unless otherwise specified, "parts by weight" and "% by weight", respectively.

In the Examples and Comparative Examples that follow, the initial adhesive strength, standard adhesive strength, cold water resistance, alkali washability and odor were evaluated according to the methods given below.

<u>Initial adhesive strength</u>

A glass plate (10 cm x 10 cm, thickness: 2 mm) previously washed and dried is preheated at 40°C. The specimen adhesive is applied on a sheet of label paper using a bar coater in an amount of 10 g-solid/$m^2$. The label paper is patched on the above glass plate, and immediately thereafter gently pressed with a rubber roll to prepare a test piece. After 30 seconds, the test piece is subjected to 180° peeling test with a tensile tester (AUTOGRAPH DCS-100, made by Shimadzu Corporation) at an extension rate of 500 mm/min to determine the initial adhesive strength. The result is shown in terms of the following rating.

◎ : No interfacial delamination at all between the label paper and the glass plate, and only cohesive failure of the label paper is observed.

○ : Cohesive failure of the label paper is observed in an area of from 30% to 90% of the adhesive mileage.

△ : Cohesive failure of the label paper is observed in an area of from 5% upto 30% of the adhesive mileage.

X : No cohesive failure of the label paper at all, and only interfacial delamination between the label paper and the glass plate is observed.

Standard adhesive strength

Test piece is prepared in the same manner as in the case of the above initial adhesive strength measurement. The test piece is dried at 40 °C for 24 hours and then allowed to stand at 20 °C, 65% RH for 3 days. Thereafter the piece is subjected to 180° peeling test and the result is evaluated in the same manner as above.

Cold water resistance:

The test piece prepared in the same manner as that for testing standard adhesive strength is immersed (gradually, to prevent occurrence of temperature nonuniformity) in cold water of 10 °C. After 30 days' immersion, the test piece is taken out from the cold water and tested for the resistance to cold water of the adhesion between the glass plate and the label paper by peeling the paper with the finger nail. The result is shown by the following rating.
◎ : No interfacial delamination at all between the label paper and the glass plate when strong peeling force is applied with the finger nail; only cohesive failure of the label paper is observed.
○ : Only interfacial delamination occurs between the label paper and the glass plate when strong forced peeling force is applied with the finger nail.
△ : Only interfacial delamination occurs between the label paper and the glass plate when weak peeling force is applied with the finger nail.
X : Only interfacial delamination readily occurs between the label paper and the glass plate when weak rubbing force is applied with the finger.

Alkali washability

The test piece prepared in the same manner as that for testing the standard adhesive strength (except for changing the drying condition to 40 °C, 48 hours) is immersed in a 3% aqueous NaOH solution while being kept such that the adhesive surface stands upright). After 4 minutes and after 30 minutes the test piece is watched for whether the label paper falls off and drops from the glass plate. The condition of the label paper is shown by using the following coding.
◎ : The label paper falls off completely from the glass plate.
○ : 30 to 90% of the adhesive mileage of the label paper peels off from the glass plate.
△ : 5 upto 30% of the adhesive mileage of the label paper peels off from the glass plate.
X : The label paper sticks to the glass plate and does not peel off at all.

Odor

Specimen adhesive is sniffed at for bad odor, and the result is shown by the following rating.
◎ : No odor at all.
△ : Somewhat disagreeable odor.
X : Very disagreeable odor.

Example 1

A dissolving tank equipped with a stirrer and a thermometer was charged with a prescribed amount of water, 100 parts of a PVA (PVA-117, degree of hydrolysis: 98.5 mol%, degree of polymerization: 1,750, made by Kuraray Co.) and 30 parts of a polyvinylamine salt (XP-00013, made by Air Products Co.). The mixture was dissolved by heating with stirring at 95 °C for 1 hour, and the solution was cooled. To the solution was added 50 parts of fine powder of crotonic acid-modified polyvinyl acetate (ASRCL-09, water-insoluble and alkali soluble; made by Denki Kagaku Kogyo K.K.) and then 10 parts of a polyaldehyde (PALSX-08, made by Japan Carlit Co.), and the mixture was stirred well to give an adhesive composition. The adhesive composition thus obtained was viscous and had a good fluidity and comprised the crotonic acid-modified polyvinyl acetate dispersed therein in the form of fine powder. The concentration and viscosity, and evaluation results of the obtained adhesive are shown in Table 1 and Table 2, respectively.

Example 2

A dissolving tank equipped with a stirrer and a thermometer was charged with a prescribed amount of water and 100 parts of a PVA (PVA-117, made by Kuraray Co.), and the mixture was dissolved by heating with stirring at 95 °C for 1 hour, and the solution was cooled. To the solution was added in sequence 60 parts of fine powder of crotonic acid-modified polyvinyl acetate, 20 parts of chitosan and 5 parts of glyoxal and the mixture was stirred well to give an adhesive composition. The adhesive composition thus obtained was a mixture similar to that in Example 1.

The concentration and viscosity, and evaluation results of the obtained adhesive are shown in Table 1 and Table 2, respectively.

Example 3

Example 2 was repeated except for using, instead of crotonic acid-modified polyvinyl acetate, fine powder of an isobutylene-maleic anhydride copolymer (Isobam-10, molecular weight: 160,000 to 170,000; made by Kuraray Co.) in a ratio as shown in Table 1). The adhesive composition obtained comprised, similar to Example 2, the fine powder of Isoban-10 dispersed therein as it was.

The concentration and viscosity, and evaluation results of the obtained adhesive are shown in Table 1 and Table 2, respectively.

Example 4

The same apparatus as used in Example 1 was charged with a prescribed amount of water, 100 parts of a PVA (PVA-117, made by Kuraray Co.) and 50 parts of a calcium carbonate filler (Whiton P-30, made by Shiraishi Kogyo Co.), and the mixture was dissolved by heating at 95 °C for 1 hour, and the solution was then cooled. To the solution was added 30 parts of a polyethyleneimine (Epomin SP-018, made by Japan Catalytic Chemical Industry Co., Ltd.), 7 parts of a dialdehyde-starch (Caldus 5S, made by Japan Carlit Co.) and 20 parts of a styrene-maleic anhydride fine powder (SMA-1000 made by Arco Co.) in this order, and the mixture was stirred well to give an adhesive composition.

The concentration and viscosity, and evaluation results of the obtained adhesive are shown in Table 1 and Table 2, respectively.

Example 5

Example 2 was repeated except for using, instead of PVA-117 and the crotonic acid-modified polyvinyl acetate, PVA-217 (degree of hydrolysis: 88.0 mol%, degree of polymerization: 1,750; made by Kuraray Co.) and aluminum fine powder (reagent grade, made by Wako Pure Chemical Industries, Ltd.), respectively in ratios as shown in Table 1.

The concentration and viscosity, and evaluation results of the obtained adhesive are shown in Table 1 and Table 2, respectively.

Example 6

Example 3 was repeated except for using, instead of PVA-217 and Isobam-10, PVA-CS (degree of hydrolysis: 97.5 mol%, degree of polymerization: 1,750; made by Kuraray Co.) and aluminum fine powder (reagent grade, made by Wako Pure Chemical Industries, Ltd.), respectively, and for further using as a filler a clay (Huber #900) in ratios as shown in Table 1.

The concentration and viscosity, and evaluation results of the obtained adhesive are shown in Table 1 and Table 2, respectively.

Example 7

Example 6 was repeated except for using, instead of PVA-CS, aluminum fine powder and clay, carboxyl group-modified PVA (content of carboxyl group: 1 mol%, degree of hydrolysis: 98 mol%, degree of polymerization: 1,750), an acid type super-absorbent polymer (de-alkali treated KI Gel 201 that was made by Kuraray Co., insoluble in water and highly swellable in aqueous alkali) and silica (Nipsil NS, made by Nippon Silica Kogyo Co.), respectively, in ratios as shown in Table 1.

The concentration and viscosity, and evaluation results of the obtained adhesive are shown in Table 1 and Table 2, respectively.

Example 8

Example 6 was repeated except for using, instead of PVA-CS and aluminum fine powder, cation-modified PVA (content of cation: 0.5 mol%, degree of hydrolysis: 98.5 mol%, degree of polymerization: 1,750), and a styrene-maleic anhydride copolymer fine powder (SMA-1000 made by Arco Co.) respectively, and for further using an ethylene-vinyl acetate copolymer emulsion (OM-4000, made by Kuraray Co.) in ratios as shown in Table 1.

The concentration and viscosity, and evaluation results of the obtained adhesive are shown in Table 1 and Table 2, respectively.

Example 9

The procedure of Example 4 was followed with the use of a sulfonic acid-modified PVA (content of sulfonic acid group: 1 mol%, degree of hydrolysis: 98.5 mol%, degree of hydrolysis: 1,750), hexamethylenediamine (reagent grade, made by Wako Pure Chemical Industries, Ltd.), a polyaldehyde (PALSX-08, made by Japan Carlit Co.), a carboxymethylcellulose (acid type, made by DAICEL Co.) and clay in ratios as shown in Table 1, to obtain an adhesive composition.

The concentration and viscosity, and evaluation results of the obtained adhesive are shown in Table 1 and Table 2, respectively.

Example 10

Example 6 was repeated except for using acid type casein fine powder (reagent grade, made by Wako Pure Chemical Industries, Ltd.) instead of the aluminum fine powder.

The concentration and viscosity, and evaluation results of the obtained adhesive are shown in Table 1 and Table 2, respectively.

Comparative Example 1

Example 2 was repeated except that the chitosan and the crotonic acid-modified polyvinyl acetate were not used.

The concentration and viscosity, and evaluation results of the obtained adhesive are shown in Table 3 and Table 4, respectively.

Comparative Example 2

Example 2 was repeated except that the glyoxal and the crotonic acid-modified polyvinyl acetate were not used.

The concentration and viscosity, and evaluation results of the obtained adhesive are shown in Table 3 and Table 4, respectively.

Comparative Example 3

Example 3 was repeated except that the chitosan was not used.

The concentration and viscosity, and evaluation results of the obtained adhesive are shown in Table 3 and Table 4, respectively.

Comparative Example 4

Example 3 was repeated except that the Isoban-10 was not used.

The concentration and viscosity, and evaluation results of the obtained adhesive are shown in Table 3 and Table 4, respectively.

Comparative Example 5

Example 7 was repeated except that the superabsorbent resin of acid type was not used.

The concentration and viscosity, and evaluation results of the obtained adhesive are shown in Table 3 and Table 4, respectively.

Comparative Example 6

Example 8 was repeated except that the glyoxal was not used.

The concentration and viscosity, and evaluation results of the obtained adhesive are shown in Table 3 and Table 4, respectively.

Comparative Example 7

An adhesive currently used commercially for paper labels for beer bottle, comprising casein as a principal component was tested. This adhesive had a solid content of 38.5%, a viscosity measured with B-type viscosimeter at 20 °C of 22,400 cps and a pH of 8.4, and was viscous aqueous solution. This smelled bad, generating ammonia odor, and its viscosity changed with time, increasing sharply on the 3rd day.

The concentration and viscosity, and evaluation results of this adhesive are shown in Table 3 and Table 4, respectively.

Comparative Example 8

A dissolving tank equipped with a stirrer and a thermometer was charged with 14.9 parts of a PVA (PVA-224, degree of hydrolysis: 88 mol%, degree of polymerization: 2,400), to which 110 parts of water was added with stirring at a room temperature, and the mixture was heated to 95 °C and kept for 1 hour to dissolve completely. To the solution were added 1.7 parts of a commercially available thickener based on polymethacrylic acid (Julymer AC-10L, made by Nihon Junyaku Co.) and 9 parts of urea (reagent grade, made by Wako Pure Chemical Industries, Ltd.), and the mixture was stirred to become uniform, cooled to room temperarue, followed by adjustment of its pH to 7 using aqueous concentrated ammonium solution. The adhesive thus obtained had a solid content of 23.2%, a viscosity of 23,800 cps and a pH of 7. The adhesive was a completely dissolved aqueous solution and did not show therein any component (D) of powder form that was water insoluble and soluble or swellable in alkali, which had been observed in Example 9.

The concentration and viscosity and evaluation results of the adhesive obtained are shown in Table 3 and Table 4, respectively.

Comparative Examples 9 through 11

Example 3 was repeated three times each time except for using, instead of Isoban-10 used in Example 3, urea powder (water soluble and alkali soluble) (Comparative Example 9), a conventional thickener (Rheogic 250H; sodium polyacrylate, water soluble and alkali soluble, made by Nihon Junyaku Co.) (Comparative Example 10) or polyvinyl chloride powder (water insoluble and alkali insoluble) (Comparative Example 11).

The concentrations and viscosities and evaluation results of the adhesives obtained are shown in Table 3 and Table 4, respectively.

Obviously, numerous modifications and variations of the present invention are possible in light of the above teachings. It is therefore to be understood that within the scope of the appended claims, the invention may be practiced otherwise than as specifically described herein.

Table 1

| Ex. | PVA resin (A) | Amino compound or its salt (B) | Crosslinking agent (C) | Component (D) | Filler (E) | Aqueous emulsion (F) | Parts incorporated | | | | | | Properties of composition | |
|---|---|---|---|---|---|---|---|---|---|---|---|---|---|---|
| | | | | | | | (A) | (B) | (C) | (D) | (E) | (F) | Solid content (%) | Viscosity (20℃) (cps) |
| 1 | PVA-117[1] | polyvinylamine salt[7] | polyaldehyde[11] | crotonic acid-modified PVA[13] | — | — | 100 | 30 | 10 | 50 | — | — | 21.4 | 18,960 |
| 2 | 〃 | chitosan[8] | glyoxal | 〃 | — | — | 100 | 20 | 5 | 60 | — | — | 20.2 | 16,470 |
| 3 | 〃 | 〃 | 〃 | Isobam-10[14] | — | — | 100 | 30 | 7 | 80 | — | — | 23.9 | 19,080 |
| 4 | 〃 | polyethylene-imine[9] | dialdehyde-starch[12] | SMA-1000[15] | Calcium carbonate[20] | — | 100 | 30 | 7 | 20 | 50 | — | 26.9 | 18,380 |
| 5 | PVA-217[2] | chitosan[8] | glyoxal | aluminum[16] | — | — | 100 | 20 | 5 | 10 | — | — | 20.8 | 17,420 |
| 6 | PVA-CS[3] | 〃 | 〃 | 〃 | clay[21] | — | 100 | 20 | 3 | 10 | 100 | — | 32.4 | 24.200 |
| 7 | carboxyl group-modified PVA[4] | 〃 | 〃 | Super-absorbent resin of acid type[17] | silica[22] | — | 100 | 15 | 2 | 20 | 150 | — | 33.1 | 28,060 |
| 8 | cation-modified PVA[5] | 〃 | 〃 | SMA-1000[15] | clay[21] | ethylene-vinyl acetate copolymer emulsion[23] | 100 | 20 | 3 | 20 | 100 | 30 | 36.6 | 25,120 |
| 9 | sulfonic acid-modified PVA[6] | hexamethylene-diamine[10] | polyaldehyde[11] | CMC of acid type[18] | 〃 | — | 100 | 60 | 30 | 40 | 80 | — | 32.4 | 20,040 |
| 10 | PVA-CS[3] | chitosan[8] | glyoxal | Casein of acid type[19] | 〃 | — | 100 | 20 | 3 | 10 | 100 | — | 32.8 | 25,430 |

See Table 5 for notes 1) through 22).

Table 2

| Example | Initial adhesive strength | Standard adhesive strength | Cold water resistance | Alkali washability | | Odor |
|---|---|---|---|---|---|---|
| | | | | 4 min | 30 min | |
| 1 | ○ | ○ | ○ | △ | ◎ | ○ |
| 2 | ○ | ◎ | ◎ | △ | ◎ | ○ |
| 3 | ○ | ◎ | ◎ | ◎ | ◎ | ○ |
| 4 | ○ | ○ | △ | ◎ | ◎ | ○ |
| 5 | ○ | ◎ | ◎ | ○ | ◎ | ○ |
| 6 | ◎ | ◎ | ◎ | ◎ | ◎ | ○ |
| 7 | ○ | ◎ | ◎ | ○ | ◎ | ○ |
| 8 | ◎ | ◎ | ◎ | ◎ | ◎ | ○ |
| 9 | ○ | ○ | ○ | △ | ◎ | ○ |
| 10 | ◎ | ◎ | ◎ | △ | ◎ | ○ |

Table 3

| Example | PVA resin (A) | Amino compound or its salt (B) | Cross-linking agent (C) | Component (D) Those in parentheses are substances (X) other than component (D) | Filler (E) | Aqueous emulsion (F) | Parts incorporated | | | | | | Properties of composition | |
|---|---|---|---|---|---|---|---|---|---|---|---|---|---|---|
| | | | | | | | (A) | (B) | (C) | (D) or (X) | (E) | (F) | Solid content (%) | Viscosity (20℃) (cps) |
| 1 | PVA-117[1] | — | glyoxal | — | — | — | 100 | — | 2 | — | — | — | 17.6 | 17,860 |
| 2 | 〃 | chitosan[8] | — | — | — | — | 100 | 20 | — | — | — | — | 18.1 | 20,400 |
| 3 | 〃 | — | glyoxal | Isobam-10[14] | — | — | 100 | — | 10 | 10 | — | — | 19.6 | 21,900 |
| 4 | 〃 | chitosan[8] | 〃 | — | — | — | 100 | 40 | 10 | — | — | — | 18.7 | 21,140 |
| 5 | carboxyl group-modified PVA[4] | 〃 | 〃 | — | silica[22] | — | 100 | 20 | — | — | 150 | — | 31.8 | 27,600 |
| 6 | Cation-modified PVA[5] | 〃 | — | SMA-1000[15] | clay[21] | ethylene-vinyl acetate copolymer emulsion[23] | 100 | 80 | — | 20 | 100 | 30 | 30.2 | 18,930 |
| 7 | Casein-based adhesive | | | | | | | | | | | | 38.5 | 22,400 |
| 8 | PVA-based adhesive PVA-224/thickner/urea/water(14.9/1.7/9/110) | | | | | | | | | | | | 23.2 | 23,800 |
| 9 | PVA-117[1] | chitosan[8] | glyoxal | (urea) | — | — | 100 | 30 | 7 | (80) | — | — | 24.8 | 20,040 |
| 10 | 〃 | 〃 | 〃 | (Rheogic 250H)[24] | — | — | 100 | 30 | 7 | (80) | — | — | 23.7 | 21,920 |
| 11 | 〃 | 〃 | 〃 | (polyvinyl chloride) | — | — | 100 | 30 | 7 | (80) | — | — | 23.1 | 20,180 |

See Table 5 for notes 1), 4), 5), 8), 14), 15) and 21) through 24).

Table 4

| Comparative Example | Initial adhesive strength | Standard adhesive strength | Cold water resistance | Alkali washability | | Odor |
|---|---|---|---|---|---|---|
| | | | | 4 min | 30 min | |
| 1 | ○ | ○ | △ | X | △ | ○ |
| 2 | ○ | ○ | X | X | ○ | ○ |
| 3 | ○ | ○ | X | ◎ | ◎ | ○ |
| 4 | ○ | ○ | ◎ | X | ◎ | ○ |
| 5 | ◎ | ◎ | ◎ | X | ◎ | ○ |
| 6 | ◎ | ◎ | X | ◎ | ◎ | ○ |
| 7 | ○ | ◎ | X | ◎ | ◎ | X |
| 8 | ○ | ○ | X | X | X | X |
| 9 | ○ | ○ | △ | X | X | ○ |
| 10 | ○ | ○ | △ | X | X | ○ |
| 11 | ○ | ○ | ◎ | X | ◎ | ○ |

Table 5-1

(Footnotes for Table 1 and Table 3 are shown below.)

1) PVA-117: Degree of hydrolysis: 98.5 mol%, degree of polymerization: 1,750; made by Kuraray Co.

2) PVA-217: Degree of hydrolysis: 88 mol%, degree of polymerization: 1,750; made by Kuraray Co.

3) PVA-CS : Degree of hydrolysis: 97.5 mol%, degree of polymerization: 1,750; made by Kuraray Co.

4) Carboxyl group-modified PVA: Content of carboxyl group: 1 mol%, degree of hydrolysis: 98 mol%, degree of polymerization: 1,750

5) Cation-modified PVA: Content of cation: 0.5 mol%, degree of hydrolysis: 98.5 mol%, degree of polymerization: 1,750

6) Sulfonic acid-modified PVA: Content of sulfonic acid: 1.0 mol%, degree of hydrolysis: 98.5 mol%, degree of polymerization: 1,750

7) Polyvinyl amine salt: XP-00013, made by Air Products.

8) Chitosan: Obtained by dissolving 15 parts of a chitosan having an amine group content of 89% in an aqueous lactic acid-acidic solution to a concentration of 15%.

9) Polyethyleneimine: Epomine SP-018, made by Japan Catalytic Chemical Industry Co.

10) Hexamethylenediamine: Reagent grade, made by Wako Pure Chemical Industries, Ltd.

11) Polyaldehyde: PAL SX-08, made by Japan Carlit Co.

12) Dialdehyde starch: Caldus 5S, made by Japan Carlit Co.

13) Crotonic acid-modified polyvinyl acetate: ASR CL-09, fine powder, made by Denki Kagaku Kogyo K.K.

14) Isobam-10: Isobutylene-maleic anhydride copolymer, made by Kuraray Co.

15) SMA-1000: Styrene-maleic anhydride copolymer, molecular weight: 1,700, fine powder, made by Arco.

16) Aluminum: Reagent grade, fine powder, made by Wako Pure Chemical Industries, Ltd.

Table 5-2

17) Super-absorbent resin of acid type: Water-insoluble and alkali-swellable fine powder obtained by immersing KI GEL 201K (super-absorbent polymer made by Kuraray Co.) in an aqueous hydrochloride solution for 3 days, and washing with water and drying the mixture.

18) Acid type CMC: Fine powder of acid type carboxymethylcellulose, made by DAICEL Co.

19) Acid type casein: Reagent grade, fine powder, made by Wako Pure Chemical Industries, Ltd.

20) Calcium carbonate: Whiton P-30, made by Shiraishi Kogyo Co.

21) Clay: Huber #900

22) Silica: Nipsil NS, made by Nihon Silica Kogyo Co.

23) EVA emulsion: OM-3400, an ethylene-vinyl acetate copolymer emulsionm made by Kuraray Co.

24) Rheogic 250H: Water-soluble and alkali-soluble sodium polyacrylate, made by Nippon Junyaku Co.

## Claims

**1.** A composition comprising a water-soluble polyvinyl alcohol (A), an amino compound or its salt (B), a crosslinking agent (C) and as component (D) at least one water-insoluble and alkali-soluble substance and/or water-insoluble and alkali-swellable substance.

**2.** A composition comprising a water-soluble polyvinyl alcohol (A), an amino compound or its salt (B), a crosslinking agent (C), as component (D) at least one water-insoluble and alkali-soluble substance and/or water-insoluble and alkali-swellable substance, and a filler (E).

**3.** A composition according to Claim 1 or 2, wherein said amino compound or its salt (B) is chitosan.

**4.** A composition according to any one of Claims 1 to 3, wherein said crosslinking agent (C) is at least one aldehyde-based compound, epoxy compound and/or aminoplast compound.

**5.** A composition according to Claim 4, wherein said crosslinking agent (C) is an aldehyde-based compound.

**6.** A composition according to any one of Claims 1 to 5, wherein said component (D) is at least one $\alpha$-olefin-maleic anhydride copolymer and/or acid-modified polyvinyl ester.

**7.** A composition according to any one of Claims 1 to 5, wherein said component (D) is an isobutylene-maleic anhydride copolymer.

**8.** A composition according to any one of Claims 1 to 5, wherein said component (D) is a styrene-maleic anhydride copolymer.

9. A composition according to any one of Claims 1 and 3 to 8, wherein the amounts incorporated of the components are, based on 100 parts by weight of said polyvinyl alcohol (A), 1 to 100 parts by weight for said amino compound or its salt (B), 0.05 to 100 parts by weight for said crosslinking agent (C) and 1 to 500 parts by weight for said component (D), respectively.

10. A composition according to any one of Claims 2 to 8, wherein the amounts incorporated of the components are, based on 100 parts by weight of said polyvinyl alcohol (A), 1 to 100 parts by weight for said amino compound or its salt (B), 0.05 to 100 parts by weight for said crosslinking agent (C), 1 to 500 parts by weight for said component (D), and 10 to 500 parts by weight of said filler (E), respectively.

11. An adhesive for labels comprising a composition according to any one of Claims 1 to 10.

12. A glass base material patched with a label to which an adhesive for labels according to Claim 11 has been applied.

**Patentansprüche**

1. Zusammensetzung, umfassend einen wasserlöslichen Polyvinylalkohol (A), eine Aminoverbindung oder ihr Salz (B), ein Vernetzungmittel (C) und als Bestandteil (D) mindestens eine wasserunlösliche und basenlösliche Substanz und/oder eine wasserunlösliche und in Basen quellbare Substanz.

2. Zusammensetzung, umfassend einen wasserlöslichen Polyvinylalkohol (A), eine Aminoverbindung oder ihr Salz (B), ein Vernetzungsmittel (C), als Bestandteil (D) mindestens eine wasserunlösliche und basenlösliche Substanz und/oder wasserunlösliche und in Basen quellbare Substanz und einen Füllstoff (E).

3. Zusammensetzung nach Anspruch 1 oder 2, in der die Aminoverbindung oder ihr Salz (B) Chitosan ist.

4. Zusammensetzung nach einem der Ansprüche 1 bis 3, in der das Vernetzungsmittel (C) mindestens eine Verbindung auf Aldehydbasis, Epoxyverbindung und/oder Aminoplastverbindung ist.

5. Zusammensetzung nach Anspruch 4, in der das Vernetzungsmittel eine Verbindung auf Aldehydbasis ist.

6. Zusammensetzung nach einem der Ansprüche 1 bis 5, in der der Bestandteil (D) mindestens ein $\alpha$-Olefin-Maleinsäureanhydrid-Copolymer und/oder säuremodifizierter Polyvinylester ist.

7. Zusammensetzung nach einem der Ansprüche 1 bis 5, in der der Bestandteil (D) ein Isobutylen-Maleinsäureanhydrid-Copolymer ist.

8. Zusammensetzung nach einem der Ansprüche 1 bis 5, in der der Bestandteil (D) ein Styrol-Maleinsäureanhydrid-Copolymer ist.

9. Zusammensetzung nach einem der Ansprüche 1 und 3 bis 8, in der die Mengen der vermischten Bestandteile, bezogen auf 100 Gew.-Teile Polyvinylalkohol (A), 1 bis 100 Gew.-Teile der Aminoverbindung oder ihr Salz (B), 0,05 bis 100 Gew.-Teile des Vernetzungmittels (C) bzw. 1 bis 500 Gew.-Teile des Bestandteils (D) sind.

10. Zusammensetzung nach einem der Ansprüche 2 bis 8, in der die Mengen der vermischten Bestandteile, bezogen auf 100 Gew.-Teile Polyvinylalkohol (A), 1 bis 100 Gew.-Teile der Aminoverbindung oder ihr Salz (B), 0,05 bis 100 Gew.-Teile des Vernetzungsmittels (C), 1 bis 500 Gew.-Teile des Bestandteils (D) bzw. 10 bis 500 Gew.-Teile des Füllstoffs (E) sind.

11. Klebstoff für Etiketten, umfassend eine Zusammensetzung nach einem der Ansprüche 1 bis 10.

12. Glasgrundsubstanz, die mit einem Etikett versehen ist, auf das der Klebstoff für Etiketten nach Anspruch 11 aufgetragen wurde.

## Revendications

1. Une composition comprenant un alcool polyvinylique soluble dans l'eau (A), un composé amino ou son sel (B), un agent réticulant (C) et, comme composant (D), au moins une substance insoluble dans l'eau et soluble dans les alcalis et/ou une substance insoluble dans l'eau et gonflant sous l'influence des alcalis.

2. Une composition comprenant un alcool polyvinylique soluble dans l'eau (A), un composé amino ou son sel (B), un agent réticulant (C), comme composant (D), au moins une substance insoluble dans l'eau et soluble dans les alcalis et/ou une substance insoluble dans l'eau et gonflant sous l'influence des alcalis, et une charge (E).

3. Une composition selon la revendication 1 ou 2, dans laquelle ledit composé amino ou son sel (B) est le chitosane.

4. Une composition selon l'une quelconque des revendications 1 à 3, dans laquelle ledit agent réticulant (C) est au moins un composé à base d'aldéhyde, un composé époxy et/ou un composé aminoplaste.

5. Une composition selon la revendication 4, dans laquelle ledit agent réticulant (C) est un composé à base d'aldéhyde.

6. Une composition selon l'une quelconque des revendications 1 à 5, dans laquelle ledit composant (D) est au moins un copolymère d'$\alpha$-oléfine-anhydride maléique et/ou un ester polyvinylique modifié avec un acide.

7. Une composition selon l'une quelconque des revendications 1 à 5, dans laquelle ledit composant (D) est un copolymère d'isobutylène-anhydride maléique.

8. Une composition selon l'une quelconque des revendications 1 à 5, dans laquelle ledit composant (D) est un copolymère de styrène-anhydride maléique.

9. Une composition selon l'une quelconque des revendications 1 et 3 à 8, dans laquelle les quantités incorporées des composants sont, rapportées à 100 parties en poids dudit alcool polyvinylique (A), respectivement 1 à 100 parties en poids pour ledit composé amino ou son sel (B), 0,05 à 100 parties en poids pour ledit agent réticulant (C) et 1 à 500 parties en poids pour ledit composant (D).

10. Une composition selon l'une quelconque des revendications 2 à 8, dans laquelle les quantités incorporées des composants sont, rapportées à 100 parties en poids dudit alcool polyvinylique (A), respectivement 1 à 100 parties en poids pour ledit composé amino ou son sel (B), 0,05 à 100 parties en poids pour ledit agent réticulant (C), 1 à 500 parties en poids pour ledit composant (D) et 10 à 500 parties en poids de ladite charge (E).

11. Un adhésif pour étiquettes comprenant une composition selon l'une quelconque des revendications 1 à 10.

12. Une matière à base de verre marquée d'une étiquette à laquelle un adhésif pour étiquettes selon la revendication 11 a été appliqué.